# FASCICULE DE BREVET EUROPEEN

(11) **EP 3 297 855 B1**
(45) Date de publication et mention de la délivrance du brevet: **25.03.2020**
(21) Numéro de dépôt: 16724421.9
(22) Date de dépôt: 23.05.2016
(51) Int. Cl.: B60C 11/13, B60C 11/24, B60C 11/03

(54) **PNEU POUR POIDS LOURD AVEC DISPOSITIF INDICATEUR D'USURE**
REIFEN FÜR SCHWERLASTKRAFTWAGEN MIT VERSCHLEISSANZEIGE
TYRE FOR A HEAVY GOODS VEHICLE COMPRISING A WEAR INDICATOR

(30) Priorité: 22.05.2015 FR 1554650
(43) Date de publication de la demande: 28.03.2018
(73) Titulaire: Compagnie Générale des Etablissements Michelin, 63000 Clermont-Ferrand (FR)
(72) Inventeur: BARDIN, Damien, 63040 Clermont-Ferrand Cedex 9 (FR); LARREGAIN, Arnaud, 63040 Clermont-Ferrand Cedex 9 (FR); GAYTON, Christophe, 63040 Clermont-Ferrand Cedex 9 (FR); QUANTINET, Benjamin, 63040 Clermont-Ferrand Cedex 9 (FR)
(74) Mandataire: Le Cam, Stéphane Georges Elie
(86) Numéro de dépôt international: PCT/EP2016/061579
(87) Numéro de publication internationale: WO 2016/188956

(56) Documents cités:
- WO-A1-2011/101495
- CN-A- 102 548 777

## Description

### DOMAINE DE L'INVENTION

La présente invention concerne les pneus et notamment ceux pour véhicule poids lourd qui comportent dans leur bande de roulement un dessin de sculpture formé d'une pluralité de rainures, au moins une desdites rainures ayant des parties ne s'ouvrant pas directement sur la surface de roulement à l'état neuf. Cette invention concerne plus particulièrement un dispositif destiné à permettre le suivi de l'usure du pneu en roulage.

### ÉTAT DE LA TECHNIQUE

Les véhicules de type poids lourd sont équipés de pneus dont les bandes de roulement sont pourvues sur leur surface de roulement avec des découpures (rainures, incisions) permettant, par temps de pluie, une élimination rapide de l'eau dans la région de contact de la bande de roulement de chaque pneu avec la chaussée afin d'assurer un bon contact entre cette bande de roulement et la chaussée. L'eau qui n'est pas repoussée sur l'avant du pneu est emmagasinée temporairement et peut s'écouler dans les découpures.

### Définitions :

Un creux désigne de manière générique soit une rainure soit une incision et correspond à l'espace délimité par des parois de matière se faisant face et distantes l'une de l'autre d'une distance ou largeur non nulle.

Par rainure, on entend ici un creux s'ouvrant sur une surface de roulement de la bande de roulement destinée à être en contact avec la chaussée, ce creux ayant une largeur moyenne appropriée pour que les parois de matière qui le délimitent ne soient jamais en contact l'une sur l'autre dans les conditions normales d'usage du pneu. Les rainures peuvent avoir toute forme vue en section transversale et en trace sur la surface de roulement et être orientées selon une direction quelconque. Par trace d'une rainure sur la surface de roulement, on entend ici la ligne moyenne géométrique suivie par les arêtes formées par ladite rainure sur cette surface de roulement.

Par incision, on entend une fente mince ayant une largeur moyenne faible et telle que, sous des conditions d'usage du pneu, les parois de matière la délimitant puissent venir, au moins partiellement, en contact l'une sur l'autre lors du passage dans la région de contact avec la route.

Dans la présente description, on utilise les termes radial ou radialement pour indiquer une direction qui, lorsqu'elle est prise sur le pneu, est une direction perpendiculaire à l'axe de rotation du pneu tandis que, lorsqu'elle est prise sur une bande de roulement seule, cette direction correspond à la direction selon l'épaisseur de ladite bande.

Par ailleurs, on utilise le terme circonférentiel pour indiquer une direction qui, correspond à une direction tangente à tout cercle centré sur l'axe de rotation du pneu. Cette même direction correspond à la direction longitudinale de la bande de roulement celle-ci étant formée à la manière d'une bande plane avant incorporation à la fabrication d'un pneu. Plan équatorial médian : plan perpendiculaire à l'axe de rotation et passant par les points du pneu axialement les plus à l'extérieur, ce plan équatorial divisant virtuellement le pneu en deux moitiés sensiblement égales.

Par direction transversale ou axiale, on entend une direction parallèle à l'axe de rotation du pneu.

L'épaisseur totale E d'une bande de roulement est mesurée, sur le plan équatorial du pneu pourvu de cette bande, entre la surface de roulement à neuf et la partie radialement la plus à l'extérieur de l'armature de sommet du pneu.

Une bande de roulement a en outre une épaisseur maximale de matière à user en roulage, cette épaisseur maximale étant en générale inférieure à l'épaisseur totale E de la bande de roulement afin de maintenir un volume de creux approprié.

La réalisation d'une pluralité de rainures dans une bande de roulement neuve a toutefois pour inconvénient de générer une diminution des rigidités de compression et de cisaillement de la bande de roulement puisque ces rainures délimitent des portions de matière plus sensibles à la déformation comparativement aux portions délimitées par des incisions. En effet, dans le cas d'incisions les parois de matière délimitant ces incisions peuvent venir en contact les unes sur les autres au moins dans le passage dans la région de contact avec la chaussée limitant ainsi les déformations.

Cette diminution de rigidité, dans le cas de la présence de rainures, induit une augmentation des déformations et génère une diminution de la performance en usure de la bande : on observe une usure plus importante pour une distance parcourue fixée (ceci correspond à une augmentation de la vitesse d'usure de la bande). Par ailleurs, on constate une augmentation de la résistance au roulement et donc de la consommation des véhicules équipés de tels pneus, résultant d'une augmentation des pertes hystérétiques liées aux cycles de déformations de la matière composant la bande de roulement.

Quelle que soit la catégorie de pneu (c'est-à-dire que ce soit un pneu équipant un véhicule de tourisme ou un véhicule destiné à porter de lourdes charges de type poids lourd), la bande de roulement doit présenter une performance en drainage de l'eau présente sur la route qui est toujours au-dessus d'une performance minimale ou performance de sécurité. En conséquence et compte tenu de l'usure progressive de la bande de roulement qui voit se réduire progressivement les volumes des rainures, il est habituel de réaliser des rainures s'ouvrant sur la surface de roulement à l'état neuf et se prolongeant dans l'épaisseur de la bande jusqu'à un niveau qui correspond à une limite imposant le retrait du pneu et son remplacement. Ceci a pour inconvénient - comme cela a été rappelé au préalable - de diminuer très sensiblement les rigidités, à la fois la rigidité de compression et les rigidités de cisaillement, de la bande.

Pour apporter une solution à ce problème il a été proposé dans le document publié sous le numéro WO 2011/039194 de former dans une bande de roulement des rainures ayant la particularité de s'ouvrir de manière discontinue sur la surface de roulement de la bande à l'état neuf. Chaque rainure de ce type, dite rainure ondulante, peut être considérée comme ayant une géométrie qui ondule au moins dans la direction de l'épaisseur de la bande en s'ouvrant de façon discontinue sur la surface de roulement de la bande à l'état neuf.

On peut décrire une rainure ondulante comme une rainure continue comprenant une succession de parties ouvertes sur la surface de roulement à neuf, ces parties ouvertes formant des arêtes sur la surface de roulement et de parties cachées formées sous la surface de roulement c'est-à-dire ne s'ouvrant pas directement sur cette surface de roulement à neuf. En outre, les parties ouvertes et les parties cachées à neuf sont reliées entre elles de façon à assurer une continuité de l'écoulement dans la rainure ondulante. En général, la partie cachée est reliée à une partie ouverte grâce à une partie intermédiaire. Dans certaines variantes les parties intermédiaires forment un canal incliné obliquement dans l'épaisseur de la bande et reliant les parties ouvertes aux parties cachées, ces dernières ayant une géométrie sensiblement parallèle à la surface de roulement à neuf.

Une rainure ondulante peut être formée dans une bande de roulement pour s'étendre dans la direction circonférentielle ou dans toute autre direction. Comme cela est décrit dans le document WO 2011/039194, une rainure ondulante est continue à l'état initial (correspondant à l'état neuf de la bande avant moulage), ce qui permet d'assurer, en roulage sur chaussée revêtue d'eau, une capture de l'eau lors du passage dans le contact avec la chaussée, l'eau ainsi captée pouvant circuler dans la rainure ondulante sous la surface de roulement. Cette circulation dans l'intérieur de la bande favorise en outre une ventilation thermique de la bande lorsque celle-ci a une grande épaisseur comme c'est le cas pour les pneus de poids lourd. Ce même document décrit la possibilité, à l'image des dessins de sculpture de l'état de la technique, de réaliser des connexions entre au moins deux rainures ondulantes afin de former un réseau. Un avantage de ce type de dessin de sculpture est d'assurer un drainage satisfaisant quel que soit le niveau d'usure sans pour autant dégrader les rigidités de la bande que ce soit à l'état neuf ou bien à tout autre état d'usure.

Complémentairement, pour réaliser un drainage suffisant quel que soit le niveau d'usure partielle d'une bande comprenant au moins une rainure ondulante, il est suggéré de former à l'intérieur de la bande à l'état neuf au moins un canal destiné à former une nouvelle rainure ouverte sur la surface de roulement après un niveau d'usure partielle prédéterminé.

Ce type de dessin de sculpture de bande de roulement comprenant au moins une rainure ondulante pose toutefois un problème de suivi et de contrôle de l'usure de la bande, problème que la présente invention se propose de résoudre. En effet, il est bien connu pour des dessins de sculpture ayant des rainures s'ouvrant sur l'extérieur de former par moulage sur le fond des rainures des indicateurs d'usure visibles par les usagers quel que soit l'état de l'usure de la bande de roulement ; ce moyen visuel permet très aisément à l'usager de s'assurer que ses pneus n'ont pas atteint la limite d'usure fixée par chaque réglementation nationale.

Pour des pneus comportant une bande de roulement pourvue d'au moins une rainure ondulante comme celle décrite dans la publication WO 2011/039194, il peut être très difficile pour l'usager de voir le dispositif de contrôle du niveau de l'usure lorsque le pneu est neuf et ainsi d'obtenir l'information quant à l'épaisseur de matière restant à user avant de devoir retirer le pneu pour soit renouveler sa bande de roulement soit le remplacer par un pneu neuf.

Le document WO 2011/101495 A1 fait également partie de l'état de la technique.

La présente invention cherche à résoudre le problème de suivi et contrôle de l'usure d'une bande de roulement dont le dessin de sculpture comporte au moins une rainure de géométrie ondulante dans l'épaisseur de la bande. Dans ce but, l'invention propose un pneu comprenant une bande de roulement ayant une épaisseur maximale de matière à user dont une surface - dite surface de roulement - est destinée à venir en contact avec une chaussée lors d'un roulage, cette bande de roulement étant pourvue d'un dessin de sculpture comportant au moins une rainure ondulante dans l'épaisseur de la bande, cette rainure ondulante étant formée d'une pluralité de parties visibles et ouvertes sur la surface de roulement à neuf et d'une pluralité de parties cachées destinées à ne s'ouvrir sur l'extérieur qu'après une usure partielle prédéterminée de la bande, les parties cachées ayant un fond situé à une profondeur égale à l'épaisseur maximale de matière à user.

En outre, chaque partie cachée et chaque partie ouverte comportent deux extrémités, les parties cachées et les parties ouvertes étant disposées en alternance pour former la rainure et chaque partie cachée est reliée à une partie ouverte par une partie intermédiaire assurant une continuité entre ces parties ouvertes et cachées.

Ce pneu est tel que sur le fond d'au moins une partie cachée et au voisinage d'une partie intermédiaire, il est moulé au moins une plateforme pour servir d'indicateur de la limite d'usure, cette plateforme ayant une hauteur P et une longueur L mesurée entre deux extrémités dans la direction principale de la partie cachée, cette longueur L étant au plus égale à la moitié de la longueur de la partie cachée.

En outre ce pneu est tel que la partie intermédiaire la plus proche de l'indicateur d'usure a une géométrie appropriée pour permettre de l'extérieur et à neuf une vision au moins partielle de la plateforme selon un angle de vision au plus égal à 45 degrés, cet angle étant mesuré par rapport à une direction perpendiculaire à la surface de roulement à neuf.

Ce pneu est tel que le volume de la partie intermédiaire située au voisinage d'un indicateur de limite d'usure moulé sur la partie cachée est différent du volume de l'autre partie intermédiaire reliée à la même partie cachée.

La direction principale d'une partie cachée d'une rainure ondulante correspond à la direction de la rainure et correspond à la direction de la plus grande dimension de ladite partie cachée. Cette direction peut être circonférentielle sur le pneu ou transversale ou oblique.

Avantageusement, le volume de la partie intermédiaire au voisinage d'un indicateur de limite d'usure moulé sur une partie cachée est plus grand que le volume de l'autre partie intermédiaire reliée à la même partie cachée.

Grâce à cette invention, il est possible de réduire les perturbations induites sur le roulage pouvant être générées par la présence d'indicateurs d'usure en adaptant au mieux les volumes des parties intermédiaires permettant de voir ces indicateurs.

Avantageusement, l'écart entre ces volumes des parties intermédiaires est au moins égal à 5% du volume le plus grand. Pour limiter les effets, il est préférable que ce volume soit au plus égal à 30%. Une valeur intéressante pour cet écart est 20%.

Ainsi chaque indicateur d'usure est visible sur le pneu neuf ce qui permet à l'usager de s'assurer que le pneu est pourvu d'un moyen lui permettant de vérifier en permanence le niveau d'usure et cela dès l'état neuf sans pénalisation des performances notamment d'uniformité. L'écart de volumes des parties intermédiaires assure également une ventilation efficace en compensant le volume occupé par l'indicateur dans la partie cachée.

Dans une variante préférentielle, le pneu selon l'invention est tel que l'angle de vision de la plateforme formant l'indicateur est au plus égal à 30 degrés.

Dans une autre variante, le pneu est tel que la vision de la plateforme est complète, c'est à dire que, de l'extérieur, il est possible de la voir sur toute sa longueur et que par conséquent les angles de vision de ses deux extrémités sont tous les deux au plus égaux à 45 degrés.

Encore plus préférentiellement, l'angle de vision de la totalité d'un indicateur d'usure est au plus égal à 5 degrés.

Pour compléter avantageusement l'invention, il est judicieux de former au moins un puits de mesure de profondeur, ce puits s'étendant entre la surface de roulement à neuf et une partie cachée comportant un indicateur d'usure selon l'invention de manière à permettre la mesure de la distance entre la surface de roulement à neuf et le niveau d'usure maximale. Cette distance correspond à l'épaisseur de matière à user avant de devoir changer de pneu sur un véhicule.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES FIGURES

La figure 1 représente une vue partielle d'une bande de roulement selon une première variante de l'invention ;
La figure 2 représente une vue en coupe selon un plan coupant la figure 1 suivant la ligne II-II ;
La figure 3 montre une vue en coupe selon un plan coupant la figure 1 suivant la ligne III-III ;
La figure 4 montre une vue en coupe d'une deuxième variante selon l'invention ;
La figure 5 montre une vue en coupe d'une troisième variante selon l'invention.

### DESCRIPTION DES FIGURES

Pour faciliter la lecture des figures, des mêmes signes de référence sont employés pour la description de différentes variantes de l'invention dès lors que ces signes de référence renvoient à des éléments d'une même nature qu'elle soit structurelle ou bien fonctionnelle.

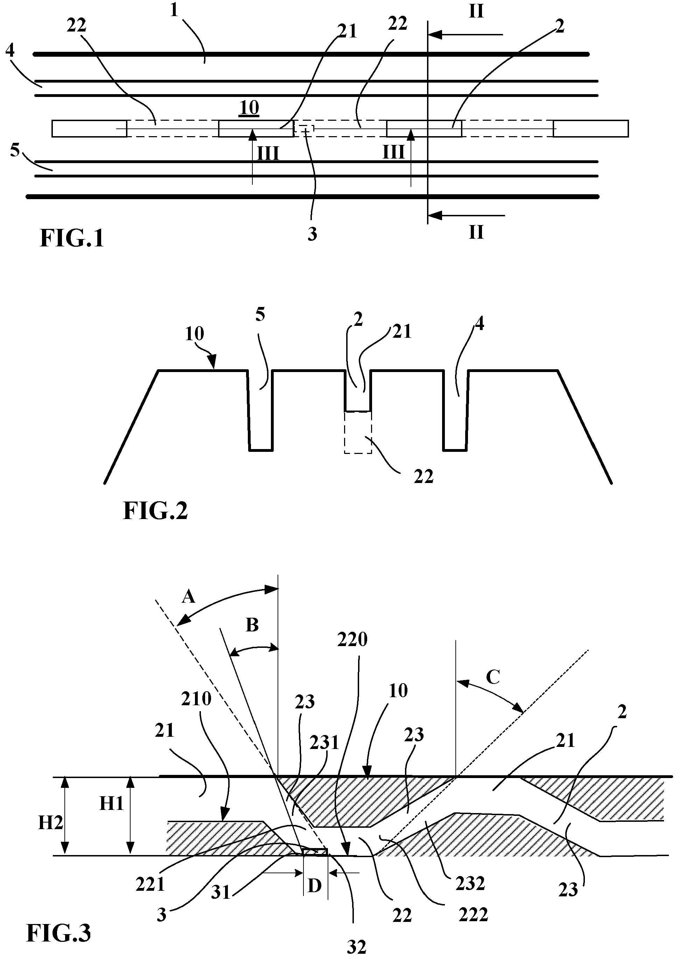

La figure 1 représente une vue partielle de la surface de roulement d'une bande de roulement d'un pneu pour véhicule poids lourd selon l'invention.

Cette bande 1 comprend une surface de roulement 10 destinée à venir en contact avec un sol lors du roulage.

Dans cette première variante de l'invention, la bande de roulement 1 a une sculpture affectant à la fois sa surface de roulement 10 à neuf et son épaisseur. Par sculpture, on entend la combinaison des éléments de matière (blocs, nervures) formés par les différents creux. Dans le cas présent, la bande 1 ne comprend que des nervures orientées circonférentiellement séparées par des rainures.

Cette bande 1 comprend notamment une rainure ondulante 2 d'orientation générale circonférentielle. Cette rainure ondulante 2 fait le tour complet du pneu et suit un profil ondulant dans la direction radiale c'est à dire dans l'épaisseur de la bande de façon à créer une pluralité de parties ouvertes 21 sur la surface de roulement 10 à neuf et une pluralité de parties cachées de rainure 22 sous cette même surface de roulement, les parties ouvertes et cachées étant disposées en alternance les unes avec les autres. Chaque partie ouverte est reliée à une partie cachée par une partie intermédiaire visible sur la figure 3. Afin d'avoir une efficacité de drainage dans cette rainure ondulante il est judicieux que les parties intermédiaires reliant les parties ouvertes aux parties cachées soient inclinées avec un angle moyen plus grand que zéro degré.

Cette bande comprend en plus deux rainures circonférentielles 4, 5 ouvertes sur toute leur longueur sur la surface de roulement à neuf, ces deux rainures 4, 5 étant formées de part et d'autre de la rainure ondulante 2. Ces rainures 4, 5 ouvertes sur toute leur longueur sur la surface de roulement à neuf ont une même profondeur égale à la hauteur de matière pouvant être usée avant de devoir renouveler la bande de roulement.

Sur la figure 2 montrant une coupe transversale selon un plan coupant la figure 1 selon la ligne II-II, on voit que les rainures circonférentielles 4, 5 ont une même profondeur égale à la profondeur maximale de la rainure ondulante 2.

Comme on le voit par ailleurs sur la figure 3 montrant, en coupe selon un plan coupant la figure 1 selon la ligne III-III, une vue partielle de la bande de roulement, la rainure ondulante 2 comprend sur cette vue partielle deux parties ouvertes 21 sur la surface de roulement 10 à l'état neuf et entre ces deux parties ouvertes une partie cachée 22 reliée aux deux autres parties ouvertes par des parties intermédiaires 231, 232.

Chaque partie cachée 22 est destinée à s'ouvrir sur la surface de roulement après une usure partielle inférieure à la profondeur du fond des parties ouvertes de manière à ce qu'il y ait toujours un volume de creux ouvert sur la surface de roulement et cela quel que soit l'usure.

En outre, chaque partie cachée 22 comprend une partie de fond 220 sensiblement parallèle à la surface de roulement à neuf, ce fond étant à une distance maximale H2 de la surface de roulement 10 à neuf.

Chaque partie cachée 22 comprend deux extrémités 221, 222 reliées chacune à une partie ouverte 21 sur la surface de roulement par les parties intermédiaires 23 (respectivement 231, 232), assurant ainsi la continuité des sections entre ces parties afin de permettre une circulation d'eau en cas de roulage sur chaussée revêtue d'eau.

Chaque partie ouverte 21 à neuf comprend un fond 210 situé à une distance H1 de la surface de roulement à neuf, cette distance H1 étant légèrement supérieure à la profondeur à partir de laquelle la partie cachée 22 s'ouvre sur la surface de roulement après usure partielle.

On constate que le fond de la rainure ondulante passe par plusieurs niveaux dans l'épaisseur de la bande, ces niveaux étant connectés entre eux par les parties intermédiaires.

Chaque partie intermédiaire 23 peut être assimilée à un canal s'enfonçant de manière oblique dans l'épaisseur de la bande pour relier une partie ouverte 21 à une partie cachée 22.

Sur la figure 3, on distingue que le fond 220 de la partie cachée le plus à l'intérieur comprend sur sa surface un indicateur d'usure constitué par une plateforme 3 de matière identique à celle de la bande, cette plateforme étant destinée à indiquer le niveau limite d'usure légale pour la bande de roulement en roulage. Cette plateforme en relief a une hauteur mesurée par rapport au fond 220 de la partie cachée 22 et a une longueur D mesurée entre ses deux extrémités dans la direction principale de la partie cachée 22. La hauteur de l'indicateur est choisie pour être égale à la profondeur de rainure minimale imposée par les règlementations nationales afin de conserver une bonne tenue de route dans toutes les conditions usuelles d'usage. Cette plateforme 3 s'étend à partir d'une extrémité 221 du fond de la partie cachée 21 de manière à pouvoir être vue de l'extérieur grâce à l'inclinaison appropriée de la partie intermédiaire 231.

Pour avoir effectivement un écoulement dans la rainure ondulante 2, il est judicieux que la partie intermédiaire 23 soit elle-même inclinée par rapport à la direction perpendiculaire à la surface de roulement, c'est à dire qu'elle fasse un angle plus grand que zéro degré. C'est ce qui est apparent sur cette figure 3 où la partie intermédiaire 232 ne permettant pas de voir l'indicateur 3 est inclinée en moyenne d'un angle C supérieur à 45 degrés.

Le volume de la partie intermédiaire 231 s'ouvrant sur un côté sur l'indicateur 3 a un volume mesuré entre ses extrémités qui est plus grand que le volume de la partie intermédiaire 232 située de l'autre côté de la partie cachée 22.

Pour permettre à l'usager de voir de façon aisée cet indicateur de niveau limite d'usure à l'état neuf et s'assurer que l'usure limite n'est pas atteinte en usage, l'invention enseigne que l'angle de vision le plus grand de la totalité de l'indicateur sur sa longueur D à partir de l'extérieur doit être au plus égal à 45 degrés, cet angle de vision étant mesuré par rapport à une direction perpendiculaire à la surface de roulement à neuf.

Avantageusement cet angle est au plus égal à 30° et est supérieur à 0°.

Sur la figure 3, on note que l'angle de vision, noté B, de l'extrémité 31 de l'indicateur 3 la plus proche de la partie intermédiaire est inférieur à l'angle de vision A de l'autre extrémité 32 de l'indicateur 3. Cet angle A est dans le cas présent égal à 30 degrés. Dans cet exemple la totalité de l'indicateur est bien visible à l'état neuf selon des angles de vision au plus égaux à 30 degrés.

Grâce à cette disposition, et compte tenu des épaisseurs moyennes des bandes de roulement pour poids lourd, il est relativement aisé pour l'usager de s'assurer de la présence de ces indicateurs. Il lui est également aisé de faire des mesures sur cet indicateur notamment en utilisant notamment une tige de mesure préalablement dimensionnée ou tout autre moyen de mesure.

Afin de satisfaire les règlementations nationales et de limiter la perturbation liée à la présence d'indicateurs au tour de roue, il préférable de prévoir une répartition homogène des indicateurs le long de chaque rainure ondulante.

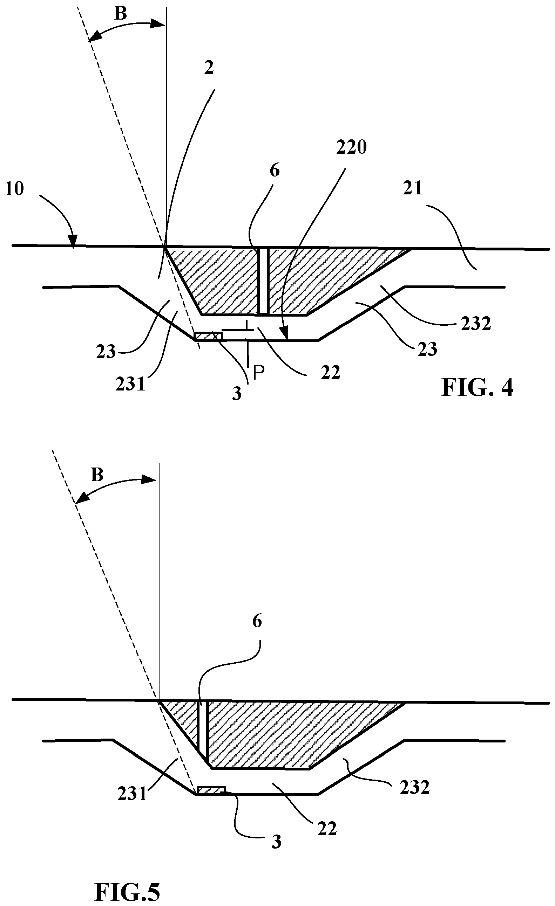

La figure 4 montre une vue en coupe d'une deuxième variante selon l'invention. Dans cette deuxième variante reprenant la disposition générale de la rainure ondulante de la figure 1, il est en outre prévu un puits radial 6 permettant d'atteindre, grâce à un moyen de mesure approprié, le fond de la partie cachée de la rainure ondulante pourvue d'un indicateur d'usure et ainsi de pouvoir mesurer l'épaisseur de matière restant à user. Ce puits de mesure est utilisé en combinaison avec la plateforme 3 moulée sur le fond de la partie cachée 22, cette plateforme 3 étant visible de l'extérieur dans la partie intermédiaire 23 entre une partie ouverte 21 et une partie cachée 22. Dans cette variante la partie intermédiaire 231 proche de la plateforme 3 a une section qui va en s'élargissant en allant vers la surface de roulement afin de générer un plus grand volume que pour la partie intermédiaire 232 située à l'autre extrémité de la partie cachée.

Dans une autre variante comportant des puits radiaux 6, ces puits peuvent être localisés à une extrémité de la partie cachée comme le montre la figure 5. Dans cette variante, l'indicateur d'usure 3 est légèrement décalé vers l'intérieur de la partie cachée 22 et la partie intermédiaire est appropriée en géométrie pour satisfaire la condition requise par l'invention sur l'angle sous lequel on peut voir au moins partiellement l'indicateur. L'angle B sous lequel on voit l'indicateur dans la partie intermédiaire avec une direction perpendiculaire à la surface de roulement est inférieur à 45 degrés.

La condition de visibilité de l'indicateur 3 est bien satisfaite et la position du puits de mesure 6 permet de faire une mesure de distance entre la surface de roulement et le fond de la partie cachée 23 entre l'indicateur et la partie intermédiaire.

L'invention - ici décrite avec trois variantes - ne saurait être limitée à ces exemples et diverses modifications ou combinaison peuvent y être apportées sans sortir du cadre défini par les revendications.

Notamment il est possible de pourvoir le fond d'au moins une partie cachée avec une plateforme ou nervure de faible largeur et continue d'un bout à l'autre de la partie cachée, cette nervure ayant précisément une hauteur correspondant à la limite légale en usure. Cette nervure est combinée avec des parties intermédiaires inclinées selon un angle au plus égal à 45 degrés voire au plus égal à 30 degrés afin de permettre à l'usager de voir cette indicateur d'usure. Dans toutes les variantes ici présentées, la largeur des plateformes sur les fonds des parties cachées est inférieure à la largeur maximale des parties cachées de manière à conserver un volume disponible pour drainer l'eau présente sur la chaussée et cela même lorsque la bande a atteint ou quasiment atteint sa limite d'usure.

## Revendications

1. Pneu comprenant une bande de roulement (1) ayant une épaisseur maximale de matière à user dont une surface - dite surface de roulement (10) - est destinée à venir en contact avec une chaussée lors d'un roulage, cette bande de roulement étant pourvue d'un dessin de sculpture comportant au moins une rainure ondulante (2) dans l'épaisseur de la bande, cette rainure ondulante (2) étant formée d'une pluralité de parties visibles (21) et ouvertes sur la surface de roulement (10) à neuf et d'une pluralité de parties cachées (22) destinées à ne s'ouvrir sur l'extérieur qu'après une usure partielle prédéterminée de la bande, les parties cachées (22) ayant un fond (220) situé à une profondeur H2 égale à l'épaisseur maximale de matière à user,
- chaque partie cachée (22) et chaque partie ouverte (21) comportant deux extrémités,
- les parties cachées (22) et les parties ouvertes (21) étant disposées en alternance
- chaque partie cachée (22) étant reliée à deux parties ouvertes (21) par des parties intermédiaires (231, 232) assurant la continuité entre lesdites parties, ce pneu étant tel que sur le fond (220) d'au moins une partie cachée (22) et au voisinage d'une partie intermédiaire (231), il est moulé au moins une plateforme (3) pour servir d'indicateur de limite d'usure, cette plateforme (3) ayant une hauteur P et une longueur D mesurée entre deux extrémités (31, 32), la longueur D étant au plus égale à la moitié de la longueur de la partie cachée et la partie intermédiaire (231) la plus proche de l'indicateur de la limite d'usure a une géométrie appropriée pour permettre, de l'extérieur et à l'état neuf, une vision au moins partielle de la plateforme (3) selon un angle de vision A, B, au plus égal à 45 degrés, cet angle étant mesuré par rapport à une direction perpendiculaire à la surface de roulement (10) à neuf,
ce pneu étant **caractérisé en ce que** le volume de la partie intermédiaire (231) au voisinage d'un indicateur de limite d'usure moulé sur une partie cachée (22) est différent du volume de l'autre partie intermédiaire (232) reliée à la même partie cachée.

2. Pneu selon la revendication 1 **caractérisé en ce que** le volume de la partie intermédiaire (231) au voisinage d'un indicateur de limite d'usure moulé sur une partie cachée (22) est plus grand que le volume de l'autre partie intermédiaire (232) reliée à la même partie cachée.

3. Pneu selon la revendication 1 ou la revendication 2 **caractérisé en ce que** l'écart de volumes entre les parties intermédiaires (231, 232) est au moins égal à 5% et au plus à 30% du volume le plus grand.

4. Pneu selon l'une quelconque des revendications 1 à 3 **caractérisé en ce que** l'angle de vision B de la plateforme est au plus égal à 30 degrés.

5. Pneu selon l'une quelconque des revendications 1 à 4 **caractérisé en ce que** l'angle de vision (A - B) de la totalité d'un indicateur de la limite d'usure est au plus égal à 5 degrés.

6. Pneu selon l'une des revendications 1 à 5 **caractérisé en ce qu'**il est en outre formé un puits radial (6) permettant de mesurer la distance entre la surface de roulement (10) à neuf et le niveau d'usure maximale.

## Patentansprüche

1. Reifen, der einen Laufstreifen (1) mit einer maximalen Dicke von zu verschleißendem Material enthält, von dem eine Fläche - Lauffläche (10) genannt dazu bestimmt ist, beim Fahren mit einer Straße in Kontakt zu kommen, wobei dieser Laufstreifen mit einem Profilmuster versehen ist, das mindestens eine gewellte Rille (2) in der Dicke des Streifens aufweist, wobei diese gewellte Rille (2) von einer Vielzahl sichtbarer und an der Lauffläche im Neuzustand (10) offener Bereiche (21) und einer Vielzahl versteckter Bereiche (22) gebildet wird, die dazu bestimmt sind, sich erst nach einem vorbestimmten teilweisen Verschleiß des Streifens an der Außenseite zu öffnen, wobei die versteckten Bereiche (22) einen Boden (220) haben, der sich in einer Tiefe H2 gleich der maximalen Dicke von zu verschleißendem Material befindet,
wobei jeder versteckte Bereich (22) und jeder offene Bereich (21) zwei Enden aufweist,
wobei die versteckten Bereiche (22) und die offenen Bereiche (21) abwechselnd angeordnet sind,
wobei jeder versteckte Bereich (22) durch Zwischenbereiche (231, 232) mit zwei offenen Bereichen (21) verbunden ist, die die Kontinuität zwischen den Bereichen gewährleisten, wobei dieser Reifen so ist, dass auf dem Boden (220) mindestens eines versteckten Bereichs (22) und in der Nähe eines Zwischenbereichs (231) mindestens eine Plattform (3) geformt ist, um als Verschleißgrenzenanzeiger zu dienen, wobei diese Plattform (3) eine Höhe P und eine Länge D gemessen zwischen zwei Enden (31, 32) hat, wobei die Länge D höchstens gleich der Hälfte der Länge des versteckten Bereichs ist, und der dem Verschleißgrenzenanzeiger am nächsten liegende Zwischenbereich (231) eine geeignete Geometrie hat, um von außen und im Neuzustand eine zumindest teilweise Sicht der Plattform (3) gemäß einem Sichtwinkel A, B höchstens gleich 45 Grad zu erlauben, wobei dieser Winkel bezüglich einer Richtung lotrecht zur Lauffläche (10) im Neuzustand gemessen wird,
wobei dieser Reifen **dadurch gekennzeichnet ist, dass** das Volumen des Zwischenbereichs (231) in der Nähe eines auf einem versteckten Bereich (22) geformten Verschleißgrenzenanzeigers anders ist als das Volumen des anderen Zwischenbereichs (232), der mit dem gleichen versteckten Bereich verbunden ist.

2. Reifen nach Anspruch 1, **dadurch gekennzeichnet, dass** das Volumen des Zwischenbereichs (231) in der Nähe eines auf einem versteckten Bereich (22) geformten Verschleißgrenzenanzeigers größer ist als das Volumen des anderen Zwischenbereichs (232), der mit dem gleichen versteckten Bereich verbunden ist.

3. Reifen nach Anspruch 1 oder Anspruch 2, **dadurch gekennzeichnet, dass** der Volumenunterschied zwischen den Zwischenbereichen (231, 232) mindestens gleich 5% und höchstens gleich 30% des größten Volumens ist.

4. Reifen nach einem der Ansprüche 1 bis 3, **dadurch gekennzeichnet, dass** der Sichtwinkel B der Plattform höchstens gleich 30 Grad ist.

5. Reifen nach einem der Ansprüche 1 bis 4, **dadurch gekennzeichnet, dass** der Sichtwinkel (A-B) der Gesamtheit eines Verschleißgrenzenanzeigers höchstens gleich 5 Grad ist.

6. Reifen nach einem der Ansprüche 1 bis 5, **dadurch gekennzeichnet, dass** außerdem ein radialer Schacht (6) geformt wird, der es ermöglicht, den Abstand zwischen der Lauffläche (10) im Neuzustand und dem maximalen Verschleißniveau zu messen.

## Claims

1. Tyre comprising a tread (1) having a maximum thickness of wearable material of which a surface - referred to as the tread surface (10) - is intended to come into contact with a roadway during running, this tread being provided with a tread pattern comprising at least one undulating groove (2) in the thickness of the tread, this undulating groove (2) being formed of a plurality of visible parts (21) which also open onto the tread surface (10) when new and of a plurality of hidden parts (22) intended to open to the outside only after a predetermined amount of partial wearing of the tread, the hidden parts (22) having a bottom (220) situated at a depth H2 equal to the maximum thickness of wearable material,
- each hidden part (22) and each open part (21) comprising two ends,
- the hidden parts (22) and the open parts (21) being arranged in alternation
- each hidden part (22) being connected to two open parts (21) by intermediate parts (231, 232) that ensure the continuity between the said parts, this tyre being such that moulded onto the bottom (220) of at least one hidden part (22) and in the vicinity of an intermediate part (231) there is at least one platform (3) to act as a wear limit indicator, this platform (3) having a height P and a length D measured between two ends (31, 32), the length D being at most equal to half the length of the hidden part and the intermediate part (231) closest to the wear limit indicator has a geometry suitable for allowing at least partial sight of the platform (3), from the outside and when new, at a viewing angle A,B at most equal to 45 degrees, this angle being measured with respect to a direction perpendicular to the tread surface (10) when new,
this tyre being **characterized in that** the volume of the intermediate part (231) in the vicinity of a wear limit indicator moulded onto a hidden part (22) is different from the volume of the other intermediate part (232) connected to the same hidden part.

2. Tyre according to Claim 1, **characterized in that** the volume of the intermediate part (231) in the vicinity of a wear limit indicator moulded onto a hidden part (22) is greater than the volume of the other intermediate part (232) connected to the same hidden part.

3. Tyre according to Claim 1 or Claim 2, **characterized in that** the difference in volume between the intermediate parts (231, 232)is at least equal to 5% and at most equal to 30% of the largest volume.

4. Tyre according to any one of Claims 1 to 3, **characterized in that** the viewing angle B for sight of the platform is at most equal to 30 degrees.

5. Tyre according to any one of Claims 1 to 4, **characterized in that** the viewing angle (A-B) for sight of the entirety of the wear limit indicator is at most equal to 5 degrees.

6. Tyre according to one of Claims 1 to 5, **characterized in that** a radial well (6) is also formed, making it possible to measure the distance between the tread surface (10) when new and the maximum wear level.
